# EUROPÄISCHE PATENTSCHRIFT

(11) **EP 0 642 969 B1**
(45) Veröffentlichungstag und Bekanntmachung des Hinweises auf die Patenterteilung: **12.03.1997**
(21) Anmeldenummer: 94113414.0
(22) Anmeldetag: 27.08.1994
(51) Int. Cl.: B62D 3/12

(54) **Zahnstangenlenkung für Kraftfahrzeuge**
Rack and pinion steering gear for an automotive vehicle
Direction à crémaillère pour véhicule automobile

(30) Priorität: 15.09.1993 DE 4331291
(43) Veröffentlichungstag der Anmeldung: 15.03.1995
(73) Patentinhaber: LEMFOERDER METALLWAREN AG., D-49441 Lemförde (DE)
(72) Erfinder: Westphal, Paul, Dipl.-Ing., D-32351 Stemwede (DE); Buhl, Reinhard, Dipl.-Ing., D-49163 Bohmte (DE)

(56) Entgegenhaltungen:
- EP-A- 0 099 311
- GB-A- 1 022 029
- GB-A- 2 183 778
- PATENT ABSTRACTS OF JAPAN vol. 12, no. 454 (M-769) 29. November 1988 & JP-A-63 180 573 (RYTHM MOTOR PARTS MFG CO LTD) 25. Juli 1988

## Beschreibung

Die Erfindung bezieht sich auf eine Zahnstangenlenkung für Kraftfahrzeuge nach dem Oberbegriff des Patentanspruches 1.

Bekanntermaßen werden Zahnstangenlenkungen durch Faltenbälge gegenüber Umwelteinflüssen und Verschmutzungen abgedichtet. Zur Gewährleistung einer größmöglichen Sicherheit, die gerade im Lenkungsbereich von Kraftfahrzeugen erforderlich ist, muß die Dichtheit der Faltbälge über einen großen Zeitraum gewährleistet sein, um Verunreinigungen von den empfindlichen Sicherheitsbauteilen des Lenksystems fernzuhalten. Die Faltenbälge sind den ständigen Bewegungen des Lenksystems ausgesetzt. Die eingeschlossene Luft kann nicht ohne Hilfsmittel angesaugt oder abgeführt werden, so daß häufig Luftleitungen speziell für diesen Zweck in das System aufgenommen werden müssen. Es sind auch Ausführungen bekannt, bei denen die Zahnstange zumindest teilweise ein Hohlprofil ist. Hierbei werden Bohrungen in dem Hohlprofilbereich der Zahnstange eingebracht, die eine Verbindung zwischen dem Innenraum des Zahnstangengehäuses und der hohl ausgebildeten Zahnstange schaffen. Da eine Zahnstangenlenkung beiderseits mit Dichtungsbälgen versehen ist, wird diese Be- und Entlüftung ebenfalls beiderseitig vorgesehen, sodaß ein Druckausgleich zwischen den Dichtungsbälgen erfolgt. Eine unmittelbare Verbindung zur Umgebung besteht nicht. Häufig führen jedoch Verunreinigungen innerhalb des Systems zum Verschluß der Entlüfungsbohrungen. Die Verunreinigungen können beispielsweise aus Abriebteilchen oder aus Schmierfett entstehen. Es kommt folglich durch den Verschluß der Entlüftungsbohrungen dazu, daß sich innerhalb des Faltenbalges der Luftdruck bei Bewegungen des Lenksystems ständig verändert. Diese permanenten Saug- und Druckwirkungen können dazu führen, daß Undichtheiten an den Anlagebereichen der Faltenbälge auftreten.

Es ist die Aufgabe der Erfindung, eine Zahnstangenlenkung für den Einsatz in Kraftfahrzeugen zu entwickeln, die auf einfache Weise eine Be- und Entlüftungsmöglichkeit für den sie abdichtenden Faltenbalg ermöglicht, um somit einen Druckausgleich über den gesamten Bewegungsbereich des Lenksystems zu schaffen.

Die Erfindung löst diese Aufgabenstellung mit dem Kennzeichen des Patentanspruches 1. Ausgestaltungen der Erfindung sind Gegenstand der Unteransprüche.

Eine Zahnstangenlenkung besteht aus einem Zahnstangen-Lenkgehäuse, einer darin beweglich gelagerten Zahnstange, die vorteilhaft wenigstens teilweise hohlzylindrisch ist. Dieser hohlzylindrische Bereich kann in axialer Richtung der Zahnstange wenigstens über den Anlagebereich des Faltenbalges am Zahnstangen-Lenkgehäuse hinaus gehen, um die Abführung der Luft zu ermöglichen. Die Zahnstange ist beidseitig an einem Kugelgelenkgehäuse befestigt. Dieses Kugelgelenkgehäuse dient der beweglichen Lagerung eines Kugelzapfens, der das Endstück einer Lenkstange bildet. Das Kugelgelenkgehäuse weist vorteilhafter Weise einen axialen Anschlußzapfen auf, der gehäuseseitig in einen Radialflansch übergeht. Auch eine radiale Anbindung des Anschlußflansches liegt im Bereich des Erfindungsgedankens. Die Zahnstange wird mit dem Anschlußzapfen lösbar verbunden. Dies erfolgt im einfachsten Falle über ein Außengewinde, das auf den Anschlußzapfen geschnitten oder durch Materialverformung, wie beispielsweise Gewinderollen, eingebracht wird. Es sind jedoch zahlreiche weitere Anbindungsmöglichkeiten gegeben, wie Punktschweißung, Verspannung, usw. Die Zahnstange kommt nach ihrer Montage am Radialflansch des Anschlußzapfens zur Anlage. In den Radialflansch ist wenigstens eine Nut eingebracht, die auf den Anschlußzapfen übergeht und somit eine durchgehende Verbindung von dem Innenraum des Faltenbalges zu der hohlzylindrischen Zahnwelle schafft.
Der Druckausgleich innerhalb des Faltenbalges wird erreicht, indem die Luft durch diese Entlüftungsnut strömen kann. Eine Verbesserung der Wirkung wird durch mehrere Entlüftungsnuten erreicht. Diese können in axialer Richtung verlaufen. Die Entlüftungsnuten sollten aus Fertigungsgründen spiralförmig eingebracht sein, wenn bei der Gewindeeinbringung ein Wälzverfahren verwendet wird, wie beispielsweise Gewinderollen.
Durch die erfindungsgemäße Gestaltung einer Zahnstangenlenkung ist es möglich, die Dichtfunktion des Faltenbalges zu optimieren.

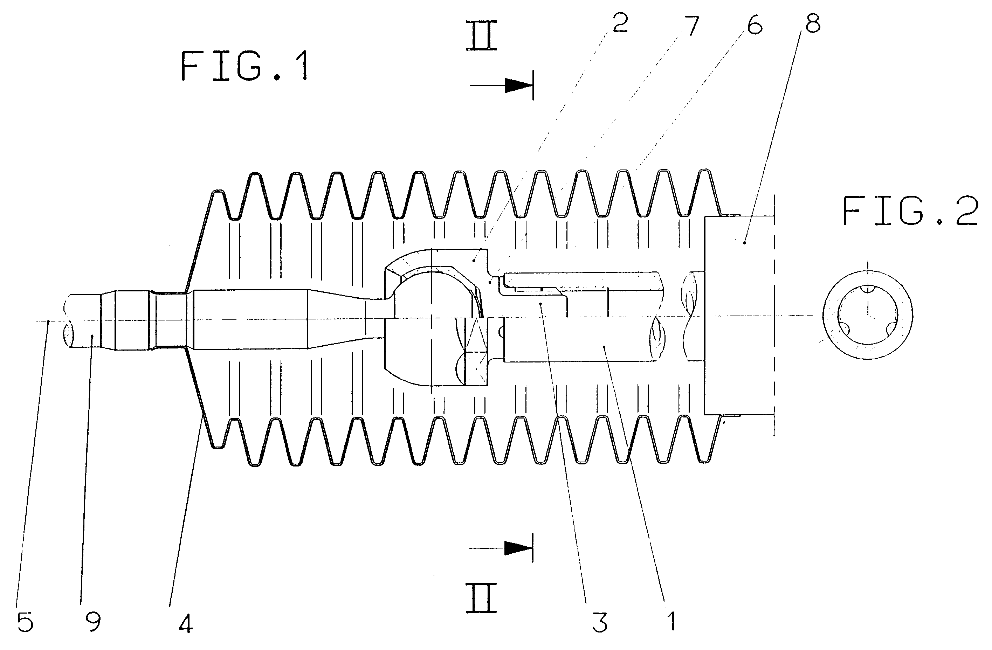

Ein Ausführungsbeispiel der Erfindung wird nachstehend unter Bezugnahme auf die Zeichnung erläutert. Es zeigt:
**Figur 1:**
   eine Zahnstangenlenkung im Teilschnitt
**Figur 2:**
   den Schnittverlauf II - II gemäß Figur 1.

In Figur 1 ist eine Zahnstangenlenkung dargestellt, deren Zahnstange (1) in einem Zahnstangen-Lenkgehäuse (8) geführt wird. Die teilweise hohlzylindrische Zahnstange (1) ist an dem Kugelgelenkgehäuse (2) lösbar befestigt. Dies geschieht in der gezeigten Ausführung durch eine Verschraubung der Zahnstange (1) mit einem axialen Anschlußzapfen (3) des Kugelgelenkgehäuses (2). Das Kugelgelenkgehäuse dient der beweglichen Lagerung eines Kugelzapfens (9), der das Endstück einer Lenkstange bildet. Die Lagerung des Kugelzapfens erfolgt in an sich bekannter Weise, so zum Beispiel über eine Lagerschale aus Kunststoff. Der Anschlußzapfen (3) ist einstückig mit dem Kugelgelenkgehäuse (2) verbunden und verfügt über ein Außengewinde, das vorteilhaft durch Materialverformmung, beispielsweise durch Rollen des Gewindes, erzeugt wird. Die hohlzylindrische Zahnstange (1) ist mit einem entsprechenden Innengewinde versehen. Sie liegt nach ihrer Montage an dem Radialflansch (7), in den der Anschlußzapfen kugelgelenkgehäuseseitig übergeht, an. Das dargestellte Lenkungsgelenk in axialer Bauweise wird vollständig von einem Faltenbalg (4) dichtend umschlossen. Dieser Faltenbalg verhindert das Eindringen von Verschmutzungen in den Bereich des Zahnstangenlenkgehäuses. Durch die Bewegungen der Lenkung und die erforderliche Dichtheit des Faltenbalges kommt es ohne entsprechende Entlüftungsvorrichtungen zu unerwünschten Verformungen oder sogar zu Undichtheiten des Faltenbalges. Erfindungsgemäß werden deshalb, wie in Figur 1 dargestellt, in den Anschlußzapfen (3) Entlüftungsnuten (6) eingebracht. Diese gehen in den Radialflansch (7) des Anschlußzapfens (3) über und ermöglichen somit die Luftab- bzw.
Luftzuführung vom Inneren des Faltenbalges, über die hohl ausgebildete Zahnstange (1), zur Entlüftungsbohrung der Zahnstange, die somit eine Verbindung zu dem gegenüberliegenden Dichtungsbalg schafft. Der Vorteil der Erfindung besteht darin, daß es nunmehr möglich ist, die Entlüftungsbohrung in der Zahnstange in einem Bereich vorzusehen, der mit Sicherheit von Verunreinigungen frei bleibt. Dies kann beispielsweise hinter den Dichtungen des Lenkgetriebes der Fall sein.

In Figur 2 ist ein Schnitt durch den Anschlußzapfen (3) des Kugelgelenkgehäuses (2) dargestellt. Erkennbar sind hierbei die in den Anschlußzapfen eingearbeiteten Entlüftungsnuten (6), die in axialer Richtung des Anschlußzapfens gesehen axial oder spiralförmig verlaufen.

### Bezeichnungsliste:

- 1: Zahnstange
- 2: Kugelgelenkgehäuse
- 3: Anschlußzapfen
- 4: Faltenbalg
- 5: Mittenachse
- 6: Entlüftungsnut
- 7: Radialflansch
- 8: Zahnstange-Lenkgehäuse
- 9: Kugelzapfen

## Patentansprüche

1. Zahnstangenlenkung für Kraftfahrzeuge, bestehend aus:
- einem Kugelgelenk mit einem Kugelzapfe (9), der das Endstück einer Spurstange bildet und einem Kugelgelenkgehäuse (2), in dem eine Lagerschale zur Lagerung des Kugelzapfens dient,
- einem Zahnstangen-Lenkgehäuse (8),
- einer innerhalb dieses Zahnstangen-Lenkgehäuses geführten, wenigstens teilweise hohlzylindrischen Zahnstange (1), die einseitig an dem Kugelgelenkgehäuse (2) befestigt ist, und
- einem Faltenbalg (4), der einerseits an dem Zahnstangen-Lenkgehäuse (8) und andererseits auf dem Kugelzapfen (9) dichtend anliegt,
dadurch gekennzeichnet, daß
die hohlzylindrische Zahnstange (1) mit dem Kugelgelenkgehäuse (2) durch einen axialen Anschlußzapfen (3) mit Entlüftungsnuten (6) verbunden ist, so daß bei Bewegungen der Zahnstange (1) der Druckausgleich im Faltenbalg (4) gegenüber dem atmosphärischen Luftdruck über die Entlüftungsnuten (6) im Anschlußzapfen (3) zur Bohrung der hohlzylindrischen Zahnstange (1) erfolgt.

2. Zahnstangenlenkung für Kraftfahrzeuge nach Anspruch 1,
dadurch gekennzeichnet, daß
sich der Anschlußzapfen (3) in axialer Richtung, konzentrisch zur Mittenachse (5) erstreckt, einstückig mit dem Kugelgenkgehäuse (2) verbunden ist und an der Seite des Kugelgelenkgehäuses (2) in einen Radialflansch (7) übergeht.

3. Zahnstangenlenkung für Kraftfahrzeuge nach den Ansprüchen 1 bis 2,
dadurch gekennzeichnet, daß
wenigstens eine Entlüftungsnut (6) in den Anschlußzapfen (3) eingebracht ist, die in den Radialflansch (7) übergeht.

4. Zahnstangenlenkung für Kraftfahrzeuge nach den Ansprüchen 1 bis 3,
dadurch gekennzeichnet, daß
mehrere Entlüftungsnuten (6) in den Anschlußzapfen (3) eingebracht sind, die in den Radialflansch (7) übergehen.

5. Zahnstangenlenkung für Kraftfahrzeuge nach den Ansprüchen 1 bis 4,
dadurch gekennzeichnet, daß
die Entlüftungsnuten (6) im Axialbereich des Anschlußzapfens (3) in dessen Oberfläche axial verlaufen.

6. Zahnstangenlenkung für Kraftfahrzeuge nach den Ansprüchen 1 bis 5,
dadurch gekennzeichnet, daß
die Entlüftungsnuten (6) im Axialbereich des Anschlußzapfens (3) in dessen Oberfläche spiralförmig verlaufen.

## Claims

1. Rack steering for motor vehicles, comprising:
- a ball joint with a ball pivot (9), which forms the end piece of a track rod, and a ball joint housing (2), in which a bearing shell serves as a bearing for the ball pivot,
- a rack steering housing (8),
- a rack (1) which is guided within this rack steering housing, is at least partly in the form of a hollow cylinder and is attached on one side to the ball joint housing (2), and
- bellows (4) which lie tight against the rack steering housing (8) on one side and on the ball pivot (9) on the other side,
characterized in that
the rack (1) in the form of a hollow cylinder is connected to the ball joint housing (2) by an axial connecting gudgeon (3) with venting grooves (6), so that during movements of the rack (1), pressure compensation in the bellows (4) with respect to the atmospheric air pressure is effected via the venting grooves (6) in the connecting gudgeon (3) to the bore of the rack (1) in the form of a hollow cylinder.

2. Rack steering for motor vehicles according to claim 1,
characterized in that
the connecting gudgeon (3) extends in the axial direction concentrically to the central axis (5), is connected to the ball joint housing (2) as one piece, and merges into a radial flange (7) on the side of the ball joint housing (2).

3. Rack steering for motor vehicles according to claims 1 to 2,
characterized in that
at least one venting groove (6) which merges into the radial flange (7) is incorporated in the connecting gudgeon (3).

4. Rack steering for motor vehicles according to claims 1 to 3,
characterized in that
several venting grooves (6) which merge into the radial flange (7) are incorporated in the connecting gudgeon (3).

5. Rack steering for motor vehicles according to claims 1 to 4,
characterized in that
the venting grooves (6) run axially in the axial region of the connecting gudgeon (3), in the surface thereof.

6. Rack steering for motor vehicles according to claims 1 to 5,
characterized in that
the venting grooves (6) run spirally in the axial region of the connecting gudgeon (3), in the surface thereof.

## Revendications

1. Direction à crémaillère pour véhicules automobiles, composée de:
- une articulation à rotule comprenant un pivot à rotule (9) constituant l'embout d'une biellette de connexion, et une cage (2) d'articulation à rotule, dans laquelle une coquille de coussinet sert à supporter le pivot à rotule,
- un boîtier (8) de direction à crémaillère,
- une crémaillère (1) guidée à l'intérieur du boîtier de direction à crémaillère, configurée de façon au moins partiellement cylindrique creuse, fixée d'un côté sur la cage (2) de l'articulation à rotule, et
- un soufflet (4), qui est en contact étanche d'un côté avec le boîtier (8) de direction à crémaillère, et de l'autre côté avec le pivot à rotule (9),
caractérisée en ce que la crémaillère cylindrique creuse (1) est reliée à la cage (2) de l'articulation à rotule par l'intermédiaire d'un tenon axial de raccordement (3) pourvu de rainures d'aération (6), de sorte que, lors des mouvements de la crémaillère (1), un équilibrage des pressions à l'intérieur du soufflet (4) est réalisé par rapport à la pression atmosphérique, par l'intermédiaire des rainures d'aération (6) ménagées dans le tenon de raccordement (3), vers le perçage de la crémaillère cylindrique creuse (1).

2. Direction à crémaillère pour véhicules automobiles selon la revendication 1, caractérisée en ce que le tenon de raccordement (3) s'étend dans le sens axial, de façon concentrique à l'axe médian (5), qu'il est relié d'un seul tenant à la cage (2) de l'articulation à rotule, et qu'il rejoint, du côté de la cage (2) de l'articulation à rotule, une collerette radiale (7).

3. Direction à crémaillère pour véhicules automobiles selon les revendications 1 à 2, caractérisée en ce qu'au moins une rainure (6) d'aération est aménagée dans le tenon de raccordement (3) et se poursuit dans la collerette radiale (7).

4. Direction à crémaillère pour véhicules automobiles selon les revendications 1 à 3, caractérisée en ce que plusieurs rainures (6) d'aération sont aménagées dans le tenon de raccordement (3) et se poursuivent dans la collerette radiale (7).

5. Direction à crémaillère pour véhicules automobiles selon l'une des revendications 1 à 4, caractérisée en ce que les rainures d'aération (6) s'étendent dans la partie axiale du tenon de raccordement (3), à la surface de celui-ci, dans le sens axial.

6. Direction à crémaillère pour véhicules automobiles selon l'une des revendications 1 à 5, caractérisée en ce que les rainures d'aération (6) s'étendent dans la partie axiale du tenon de raccordement (3), à la surface de celui-ci, suivant une forme hélicoïdale.
